# FASCICULE DE BREVET EUROPEEN

(11) **EP 1 064 776 B1**
(45) Date de publication et mention de la délivrance du brevet: **18.07.2007**
(21) Numéro de dépôt: 99902634.7
(22) Date de dépôt: 10.02.1999
(51) Int. Cl.: H04M 17/00, H04M 17/02, G07F 7/10

(54) **PROCEDE DE GESTION SECURISEE D'UN COMPTEUR D'UNITES ET MODULE DE SECURITE METTANT EN OEUVRE LE PROCEDE**
VERFAHREN FÜR EIN SICHERES EINHEITSZAHLUNGSMANAGEMENT UND ZUGEHÖRIGE SICHERHEITSVORRICHTUNG
METHOD FOR SECURELY MANAGING A UNITS COUNTER AND SECURITY MODULE IMPLEMENTING SAID METHOD

(30) Priorité: 20.03.1998 FR 9803483
(43) Date de publication de la demande: 03.01.2001
(73) Titulaire: GEMPLUS, 13881 Gémenos Cedex (FR)
(72) Inventeur: KOCH-HOURRIEZ, Carole-Audrey, Singapore 269858 (SG); PAULIAC, Mireille, Résidence Clair Soleil, F-13400 Aubagne (FR); BANCHELIN, Xavier, F-13012 Marseille (FR)
(86) Numéro de dépôt international: PCT/FR1999/000292
(87) Numéro de publication internationale: WO 1999/049646

(56) Documents cités:
- EP-A- 0 368 752
- EP-A- 0 626 664
- EP-A- 0 781 065
- US-A- 4 887 234

## Description

La présente invention a pour objet un procédé de gestion sécurisée d'un compteur d'unités implanté en mémoire, notamment d'une carte à puce en relation avec un terminal. Elle pourrait néanmoins s'appliquer à tout autre type de mémoire.

L'invention est particulièrement utile quand il s'agit de compter un très grand nombre d'unités tout en préservant la capacité de mémorisation de la mémoire.

De part la technologie employée par les fabricants de mémoire non volatiles effaçables et programmables électriquement (par exemple EEPROM), la faculté de mémorisation de la mémoire (aptitude à être mise à jour) est limitée dans le temps.

Les fabricants garantissent le bon comportement de la mémoire pour un nombre limité de mises à jour de la mémoire (une mise à jour comprend une opération d'effacement suivi d'une programmation ou écriture). Au delà, la mémoire risque de ne plus être effacée correctement ou être programmée correctement.

En moyenne, le nombre de mises à jour garanti par les fabricants de mémoire est de l'ordre de 100 000 par emplacement mémoire. Dans le cas d'un compteur d'unités, le problème consistant à préserver la faculté de mémorisation dudit compteur est d'autant plus difficile à résoudre que le nombre d'unités à compter est grand et que la fréquence de mise à jour du compteur est importante.

L'invention sera particulièrement décrite dans le cas d'une application à carte à puce dans le domaine de la publiphonie.

Il est connu dans le domaine de la carte à puce, qu'une transaction entre un terminal et un porte-monnaie électronique externe est organisée autour d'un module de sécurité (MS) comprenant un microprocesseur. Le module est généralement intégré au terminal.

Le rôle d'un module de sécurité est notamment de veiller à la vérification de l'authentification des cartes porte-monnaie électroniques externes au terminal. Dans le cadre de la publiphonie, la carte à puce porte-monnaie est une télécarte (non rechargeable), le terminal est un publiphone (ou cabine téléphonique) et le module de sécurité peut être lui-même par exemple être une carte à puce implantée dans le terminal.

On peut noter que le jeu de commandes du composant dudit module de sécurité s'appelle "système d'exploitation".

L'utilisation d'un module de sécurité permet de donner à l'exploitant d'un publiphone les moyens d'authentifier les télécartes qui sont insérées par les clients porteurs desdites télécartes. Ainsi les cartes frauduleuses sont rejetées.

En plus des fonctions d'authentification, le module propose à l'exploitant d'un publiphone de gérer de manière sécurisée un compteur d'unités qui enregistre toutes les unités consommées par les différents titulaires de cartes à pré-paiement ou de télécartes durant les communications, téléphoniques passées à partir dudit publiphone.

Cette fonctionnalité ouvre la voie à des solutions multi-opérateurs où l'émetteur des télécartes (opérateur) ne serait pas l'exploitant unique du publiphone. Pour cela, il est prévu de disposer au sein de la mémoire du module de sécurité implanté dans chaque publiphone, d'un compteur d'unités dédié à chaque opérateur.

Toujours dans le cadre de la publiphonie, un tel compteur doit pouvoir mémoriser plus de 16 millions d'unités ce qui correspond à un maximum d'unités téléphoniques susceptibles d'être enregistrées sur des lieux publics très fréquentés (aéroports) pour des mesures effectuées sur la durée de vie moyenne des compteurs d'un publiphone (environs 3 ans).

La mise à jour dudit compteur peut en outre être exigée à plusieurs reprises durant une communication téléphonique.

Pour mémoriser autant d'unités à l'aide des compteurs de l'art antérieur il faudrait utiliser une mémoire de 24 bits. Toutefois dans ce cas le nombre de mises à jour excéderait la capacité de mémorisation de cette mémoire. Cette solution n'est donc pas envisageable.

Il est connu, par ailleurs, la demande de brevet EP-0626664 qui mentionne le besoin de décompter des unités dans une carte à puce pour le domaine de la téléphonie et indique que la résolution de ce besoin bute sur l'absence de jeu d'instructions adéquate dans les système d'exploitation des téléphones portables.

Dans l'invention, on a prévu de remédier à ce problème en décomposant le compteur d'unités en au moins deux zones principales.

La premiers zone mémoire du compteur (zone A) est considérée comme un champ de bits. A chaque bit mémorisé ou "grille" ou "écrit" ou "allume" correspond une unité de communication consommée, On parle également de "jeton" pour caractériser un bit mémorisé de la zone A.

Une seconde zone mémoire (zone B) plus restreinte dont la taille permet de coder la valeur maximale du nombre d'unités à mémoriser.

Ces zones mémoires sont des zones mémoire d'une mémoire non volatile programmable électriquement et effaçable électriquement.

S'agissant de la zone A at sans rentrer dans la technologie de programmation des mémoires, un emplacement mémoire sera considéré indisponible lorsque un bit y sera mémorisé. On parlera dans la suite de manière indifférente de bit mémorisé ou de "bit allumé" ou de "bit grillé" ou de bit écrit pour signifier que les emplacements mémoire sont indisponibles et de bit éteint, non mémorisé ou non grillé pour signifier que les emplacements sont disponibles (libres).

Par convention, on considérera qu'un bit est allumé lorsque son état logique est égal à 1, et qu'un bit est éteint lorsque son état logique est égal à 0.

Un bit allumé ne sera rendu disponible (éteint) qu'au prochain effacement de toute la zone A (extinction de tous les bits la composant).

L'invention a donc plus particulièrement pour objet un procédé de gestion sécurisée d'un compteur d'unités dans une mémoire programmable électriquement, selon lequel on enregistre un nombre d'unités consommées par des utilisateurs au moyen du compteur, principalement caractérisé en ce qu'il consiste à décomposer le compteur d'unités en au moins deux zones mémoires (A, B), une première zone (A) dans laquelle on mémorise au moins un bit par au moins une unité consommée et une deuxième zone (B) dans laquelle on mémorise la valeur correspondant au cumul d'unités consommées, la deuxième zone n'étant mise à jour que lorsque le nombre d'unités consommées dépasse ou atteint le nombre de bit(s) non mémorisé(s) de la première zone (A).

Les unités consommées sont enregistrées dans la première zone (A) de manière cyclique.

Un cycle correspond à une séquence d'allumage du premier bit de la première zone (A) vers le dernier. Il prend fin lorsque tous les bits ont été allumés.

Une opération d'enregistrement de n unités consommées comprend les étapes suivantes :
- lecture du contenu de la première zone et comparaison du nombre de bits non mémorisés au nombre d'unités consommées à enregistrer,
- si ce nombre de bits non mémorisés est supérieur ou égal au nombre d'unités à enregistrer, on mémorise les bits à enregistrer dans ladite zone,
- si ce nombre est inférieur, on mémorise ce nombre de bits dans la première zone et on enregistre les unités restantes dans la deuxième zone en effectuant une opération de mise à jour de cette zone et la première zone est effacée.

Une opération de mise à jour de la deuxième zone (B) comprend une étape d'écriture dans cette zone d'une nouvelle valeur de compteur codée égale à la valeur courante à laquelle on ajoute le nombre de bits grillés de la première zone (A) et les unités restantes consommées à mémoriser.

La mise à jour de la deuxième zone comprend une étape préalable d'enregistrement d'une information témoin signifiant qu'une mise à jour est en cours, puis lorsque la mise à jour est terminée, la mise à jour consiste à effacer la première zone (A) et à effacer l'information témoin.

Pour améliorer la sécurité le compteur d'unité comporte une zone de sauvegarde (SB) de la deuxième zone (B) et ces deux zones comportent chacune un champs pour l'enregistrement d'un code de redondance (CR, SCR) pour la vérification de l'intégrité du contenu de ces deux zones.

Une opération d'enregistrement de n unités consommées comprend en outre une étape préalable de vérification de l'état du compteur comprenant les opérations suivantes :
- vérification de l'absence de l'information témoin d'une mise à jour en cours :
- dans le cas où l'information témoin est bien absente :
- vérification de la validité des champs contenant les codes de redondances :
   - dans le cas où les champs sont valides :
      - enregistrement des n unités;
   - dans le cas où les champs ne sont pas valides :
      - détection d'un défaut et arrêt du compteur,.
- dans le cas où l'information témoin est présente :
   - activation de l'opération de recouvrement pour rétablir l'intégrité des contenus du compteur.

Une opération de mise à jour de la deuxième zone comporte alors les étapes suivantes:
- enregistrement de l'information témoin,
- recopie dans la zone de sauvegarde (SB) de la valeur du compteur codée de la deuxième zone (B),
- enregistrement de la nouvelle valeur du compteur codée dans la deuxième zone (B),
- effacement de la première zone (A),
- effacement de l'information témoin.

L'opération de recouvrement consiste à déterminer à quelle étape s'est produite l'anomalie (une coupure de courant), puis à opérer selon le cas déterminé, les étapes de mise à jour de la zone de sauvegarde (SB) et/ou de la deuxième zone (B) et/ou de la première zone.

Avantageusement, la détermination de l'étape à laquelle s'est produite l'anomalie consiste à lire le contenu de chacune des zones pour savoir si l'anomalie s'est produite pendant la mise à jour de la zone de sauvegarde (SB) cas 1, pendant la mise à jour de la deuxième zone (B) cas 2, pendant l'effacement de la première zone (A) cas 3, entre la mise à jour de la deuxième zone (B) et la zone de sauvegarde (SB) cas 4, après la mise à jour de ces deux zones cas 5.

De façon pratique, le recouvrement consiste dans le cas 1 à :
- recopier la valeur contenue dans la deuxième zone (B) dans la zone de sauvegarde (SB),
- mettre à jour la deuxième zone (B) en enregistrant la nouvelle valeur qui est égale à l'ancienne à laquelle on ajoute le contenu de la première zone (A),
- effacer la première zone (A),
- effacer l'information témoin (C2) ;
dans le cas 2 à :
- recopier dans la deuxième zone (B) la valeur contenue dans la zone de sauvegarde (SB) en rajoutant la valeur contenue dans la première zone (A),
- effacer la première zone (A),
- effacer l'information témoin (C2) ;
dans le cas 3 à :
- effacer le contenu de la première zone (A),
- effacer l'information témoin (C2) ;
dans le cas 4 à :
- mettre en oeuvre les étapes selon le cas 2 ;
dans le cas 5 à :
- mettre en oeuvre les étapes selon le cas 3.

Avantageusement le procédé comprend en outre une étape d'enregistrement d'une information significative d'une défaillance en lecture ou en écriture de la première zone (A) désactivant ladite zone lorsqu'il n'a pas été possible de lire ou d'écrire dans cette zone, et une étape de lecture de cette information à chaque nouveau cycle, les unités consommées étant alors directement enregistrées de manière codée par une opération de mise à jour de la deuxième zone (B).

L'information témoin (C2) d'une mise à jour en cours et l'information significative d'une défaillance (C1) en lecture et en écriture de la première zone sont enregistrées dans une troisième zone (C) dudit compteur.

L'invention concerne également un module de sécurité mettant en oeuvre le procédé conforme à l'invention.

Un tel module pourra être implanté dans un terminal gérant des unités consommées par les utilisateur du terminal, il pourra s'agir notamment d'un terminal de téléphonie.

D'autres particularités et avantages de l'invention apparaîtront à la lecture de la description qui est faite ci-après et qui est donnée à titre d'exemple non limitatif en regard des dessins annexés sur lesquels:
- la figure 1, représente de façon schématique le compteur d'unités selon l'invention ;
- la figure 2A, représente les étapes d'enregistrement de n unités selon le procédé de l'invention ;
- la figure 2B, représente l'étape préalable de vérification 10 de la figure 2A;
- la figure 3, représente les étapes d'enregistrement des unités dans la deuxième zone (mise à jour) selon un mode préféré de réalisation ;
- la figure 4, représente les étapes du mécanisme de recouvrement ;
- la figure 5, illustre une variante dans le procédé conforme à l'invention.

Le procédé décrit dans la suite concerne un compteur protégé contre la fraude (l'intrusion, la falsification). Le procédé prévoit que lorsque le compteur est saturé, ce dernier s'arrête et en informe l'application qui l'utilise.

Dans l'exemple d'application qui est donné ci-après, et qui correspond au cas de la publiphonie cité dans le préambule, les unités consommées sont des unités téléphoniques et les tailles des zones A et B sont bien évidemment définies ici à des fins d'exemple.

Il est pertinent de considérer une zone A de 168 bits et une zone B de 24 bits (24 bits permettent en effet de mémoriser 16 777 215 unités).

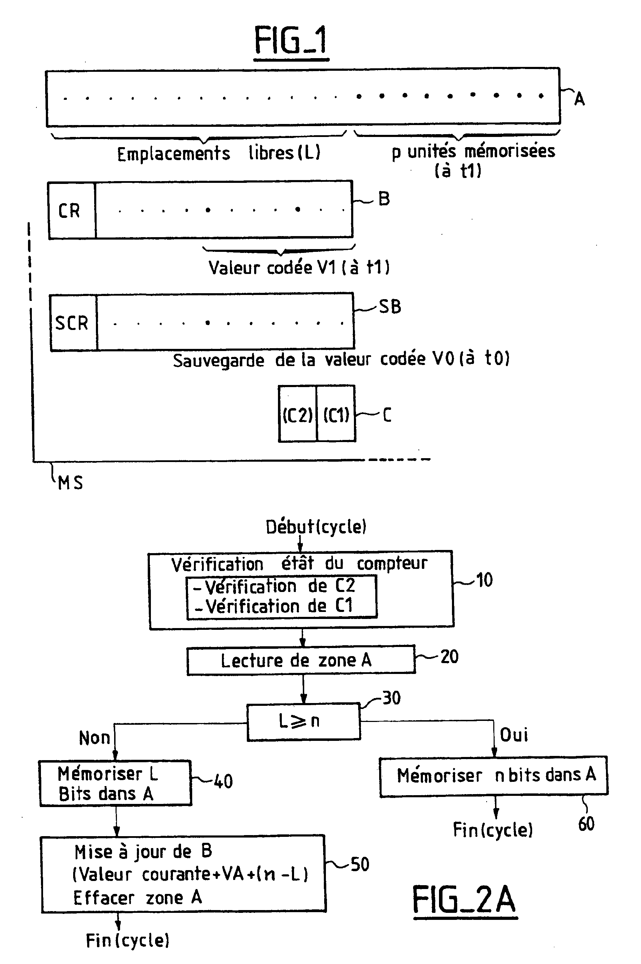

La zone B est à son tour dédoublée pour pallier à des problèmes de coupure de courant durant la mise à jour du compteur (cf. figure 1). Ce cas est détaillé dans la suite.

Comme cela a déjà été mentionné la durée d'exploitation du compteur est directement liée au nombre de mises à jour (effacement et écriture). Il est donc impératif de trouver une structure de compteur et un procédé de comptabilisation qui réduise le nombre de mises à jour.

Dans le cadre de l'invention, la mémorisation des unités de communication consommées s'effectue comme suit.

On suppose que la durée d'une communication téléphonique est divisée en plages de temps. La durée d'une plage de temps correspond à un nombre d'unités consommées fixé. Dans cet exemple, le cycle d'enregistrement des unités consommées sont définis par ces plages de temps.

Au début de chaque plage de temps, le nombre d'unités consommées doit être mémorisé dans le module de sécurité.

Ainsi, dans le cas d'une communication nécessitant 13 unités au total et où une plage de temps élémentaire comprend 3 unités, le compteur d'unités au sein du module de sécurité sera mis à jour cinq fois durant la communication et une cinquième fois en fin de communication.

Le procédé de gestion du compteur d'unités se définit par les étapes 10, 20, 30, 40, 50, 60 illustrées par la figure 2A.

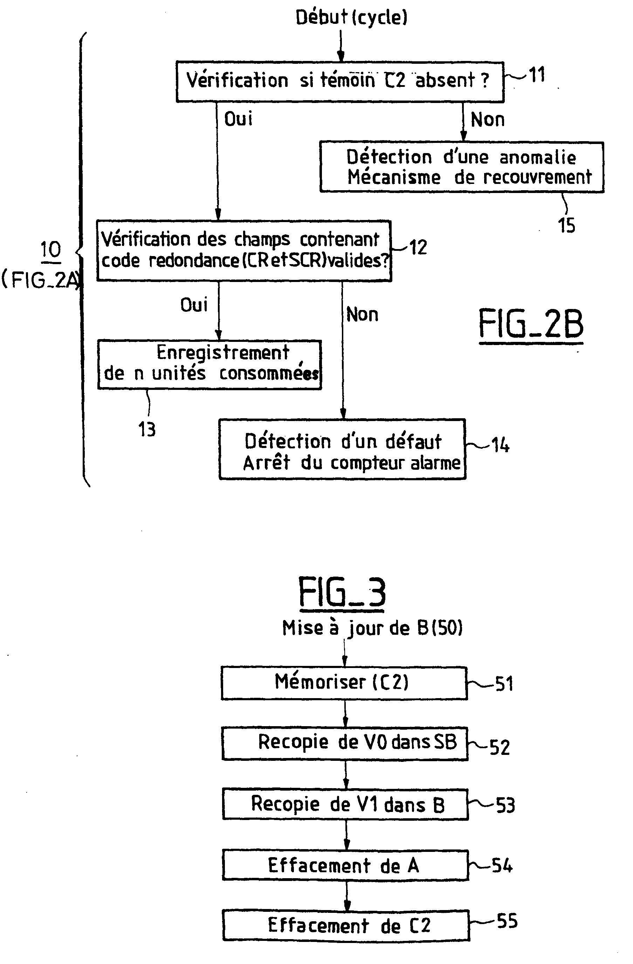

Une étape préalable à l'enregistrement des unités consiste à vérifier l'état du compteur (étape 10) détaillée à partir de la figure 2B.

A chaque demande de mémorisation d'unités consommées, le système d'exploitation du module de sécurité gérant le compteur vérifie que le nombre de bits éteints (disponibles) dans la zone A est supérieur ou égal au nombre d'unités à mémoriser (cf. figure 2A).

Dans l'affirmative, si n unités ont été consommées, n bits disponibles dans la zone A sont grillés, (on peut prévoir à titre de variante selon l'application, que n bits disponibles dans la zone A soient grillés pour n paquets d'unités consommées).

Cette opération ne nécessite aucun effacement et seule une action d'écriture revient à griller certains bits de la zone A.

Dès que le nombre n d'unités consommées à mémoriser excède le nombre de bits disponibles L restant dans la zone A, on éteint le nombre de bits disponibles L dans la zone A et les unités consommées restantes n-L sont comptabilisées dans la zone B. Une nouvelle valeur codée tenant compte de ces unités restantes est enregistrée dans la zone B par une opération de mise à jour comme suit :
La nouvelle valeur de la zone B (nombre total d'unités) est égale à la valeur courante de la zone B à laquelle il faut ajouter le nombre de bits grillés dans la zone A (valeur VA) et le nombre n-L d'unités à mémoriser.

La mise à jour de la zone B entraîne une lecture de celle-ci suivie d'un effacement et d'une écriture.

La zone A est quant à elle effacée entièrement (tous les bits sont de nouveau disponibles).

On pourrait prévoir également selon l'invention, dans le cas ou le nombre de bit disponibles dans la zone A est insuffisant, de compléter cette zone A, puis de faire une mise à jour de la zone B en mémorisant comme nouvelle valeur la valeur précédente à laquelle est ajouté le contenu de la zone A, puis d'effacer la zone A et enfin de mémoriser dans la zone A les unités consommées restantes (au lieu de les mémoriser dans la zone B). Cette variante reste bien dans le cadre du principe de l'invention.

Avec ce procédé, bien que la fréquence de mémorisation d'unités consommées soit importante, la fréquence d'effacement des zones A et B est bien plus faible. Il en est de même pour la fréquence d'écriture des différentes emplacements mémoire composant la zone A et par voie de conséquence la zone B.

La fréquence d'effacement et d'écriture des emplacements mémoire composant le compteur d'unités est directement liée d'une part à la dimension de la zone A et d'autre part à la granularité utilisée pour décomposer une communication (on entend par granularité une période élémentaire de communication correspondant à un nombre d'unités prédéterminé par l'opérateur).

On peut noter que pour connaître à tout instant le nombre total d'unités consommées à l'aide du publiphone, il suffit d'ajouter à la valeur courante de la zone B, le nombre de bits grillés de la zone A.

Dans le cadre de l'invention, il est proposé d'utiliser une fonctionnalité supplémentaire pour prolonger la durée de vie du compteur d'unités.

En effet, il est connu qu'un champ de bits est subdivisé en ensembles de huit bits consécutifs appelés octets. Comme il est décrit plus haut, la zone A est effacée aussi fréquemment que la zone B. Cependant, pour des facilités de programmation ou des contraintes liées au composant utilisé, le fait de griller un bit au sein d'un octet peut entraîner un nouveau grillage des bits déjà grillés au sein dudit octet.

Ainsi, un octet appartenant à la zone A peut être plus souvent écrit (c'est à dire, ses bits grillés) qu'un octet composant la zone B. La zone A étant alors plus stressée que la zone B, la durée d'exploitation du compteur est donc directement liée à la capacité de mémorisation de la zone A.

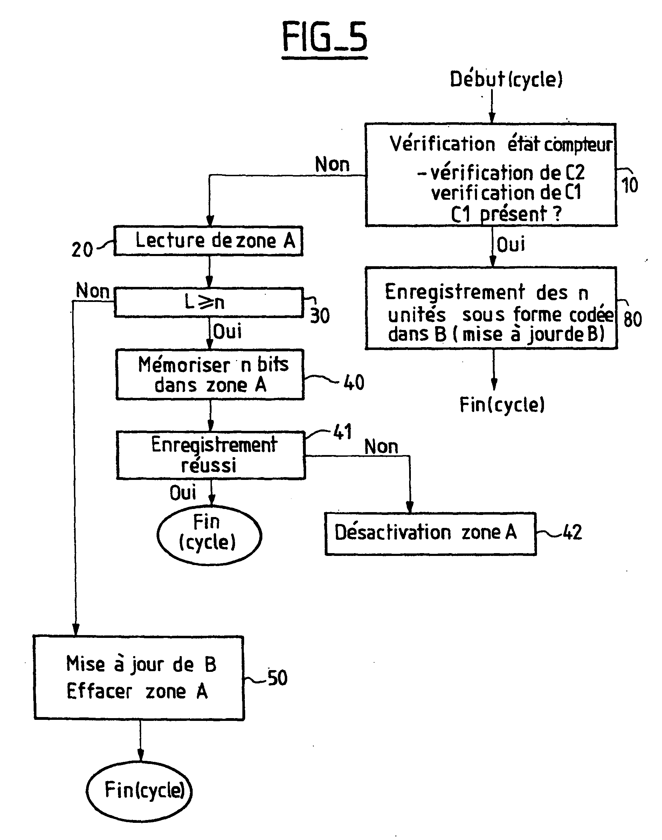

Pour pallier à ce problème, on propose dans le cadre de l'invention de prévoir au sein du compteur d'unités, une zone mémoire supplémentaire dénommée zone C comprenant au moins un emplacement pour mémoriser l'information C1 (cf. figure 1 et figure 5).

Cette variante du procédé est illustrée par la figure 5.

Dans cette variante, l'étape de vérification de l'état du compteur, préalable à l'enregistrement des unités consommées comporte une lecture de la zone C pour vérifier si l'information C1 existe.

Cette information C1 est écrite dès qu'un emplacement mémoire de la zone A ne peut plus être effacé ou écrit (car il est prévu de manière classique de contrôler la bonne exécution d'une écriture ou d'un effacement de la mémoire). Dans ce cas le système d'exploitation du module de sécurité décide de désactiver la zone A (étape 42) et de ne travailler qu'avec la zone B (étape 80). A chaque demande de mémorisation d'unités consommées la zone B est effacée et réécrite.

Bien évidemment, la capacité de mémorisation de la zone B va à son tour rapidement être détériorée mais le compteur peut continuer à être exploité quelque temps encore.

D'autre part, pour renforcer la sécurité de la gestion du compteur, il est possible d'ajouter un mécanisme permettant de garantir un état cohérent dudit compteur, si une coupure de courant intervient durant l'opération de mémorisation. Il n'est pas pertinent d'envisager une opération d'arrachement du module de sécurité car généralement celui-ci est parfaitement intégré au publiphone. Ceci dit, le cas d'arrachement se gérerait de la même manière.

Dans le cadre de l'invention, pour implanter un tel mécanisme (appelé ci-après mécanisme de recouvrement), la zone B est dotée d'un code de redondance. De plus la zone B est dupliquée (cf. figure 1, 2B, et 3).

La zone SB ainsi définie est utilisée comme sauvegarde de la précédente. Elle est mise à jour avant toute modification de la zone B.

La zone SB contient à tout moment la valeur de la zone B, précédant la dernière mise à jour de la dite zone.

Un octet supplémentaire au sein de la zone C est utilisé pour indiquer si l'opération de mémorisation a été partiellement ou entièrement effectuée, il s'agit de l'information témoin C2.

Ainsi, en début de traitement d'une demande de mémorisation d'unités, C2 est mémorisée. Elle est effacée une fois que cette même opération de mémorisation est entièrement réalisée. Pour éviter de trop stresser l'octet C2, celui-ci n'est utilisé (écrit puis effacé) que dans le cas où le nombre d'unités à mémoriser est supérieur au nombre de bits encore disponibles dans la zone A.

Dans le cas contraire, l'octet C2 est inutilisé. Parmi les bits disponibles de la zone A, n bits sont allumés. L'opération de mémorisation est terminée. On considère que la perte d'information est minime.

Dans le cas où le nombre de bits disponibles au sein de la zone A est insuffisant, il est impératif d'activer la procédure permettant ultérieurement d'actionner le mécanisme de recouvrement au cas où il y a anomalie.

En effet, si une coupure de courant survient après que la zone B ait été effacée et non à nouveau réécrite, toute l'information du compteur d'unités serait perdue.

On va maintenant détailler l'étape préalable à tout enregistrement de vérification du compteur (figure 2B).

Le système vérifie l'absence du témoin C2 (11).

Si le témoin C2 est absent (12), le système vérifie les champs contenant les codes de redondance.

Si ces champs sont valides (13) on enregistre les n unités consommées.

Si les champs ne sont pas valides (14), il y a détection d'un défaut, arrêt du compteur (et éventuellement une alarme).

Dans le cas ou le témoin existe (15) il y a mise en oeuvre du mécanisme de recouvrement détaillé à partir de la figure.

On va maintenant détailler l'opération de mise à jour de la zone B selon cette variante (cf figure 3).

Comme on peut le voir sur la figure 3 (étapes 51 à 55), le témoin C2 est tout d'abord écrit, la valeur courante par exemple V0 du compteur codée dans la zone B est recopiée dans la zone SB. Puis la zone B est mise à jour (nouvelle valeur V1 égale à la valeur courante à laquelle on ajoute le nombre de bits grillés dans la zone A et les n-L unités restantes à mémoriser). La zone A est ensuite effacée et le témoin C2 est alors effacé pour indiquer que l'opération de mémorisation a été effectuée entièrement avec succès.

Dans la description réalisée, tout se passe normalement, il n'y a pas eu coupure d'alimentation durant l'opération de mémorisation.

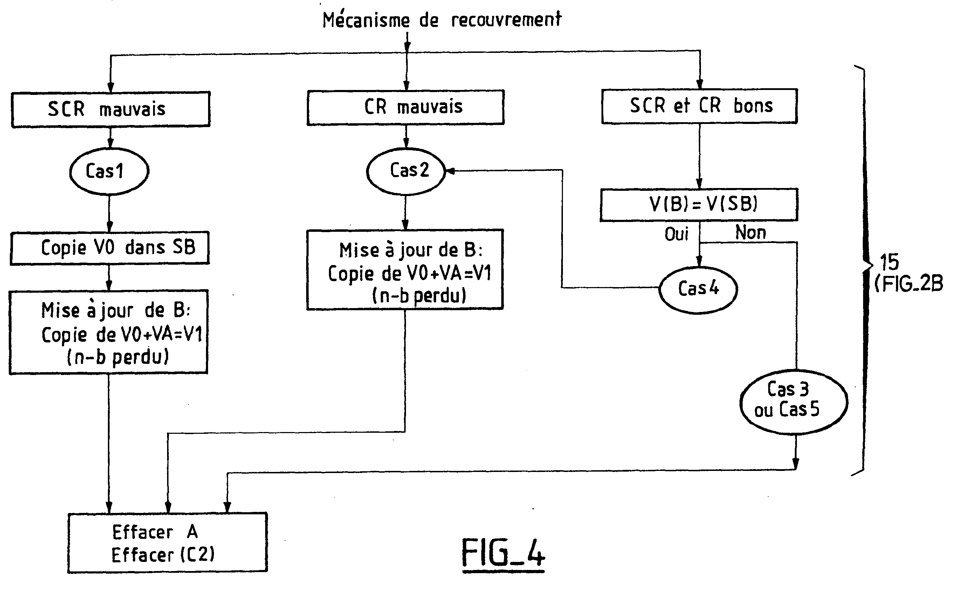

A présent, si une coupure est intervenue, l'activation du mécanisme de recouvrement est décrite ci-après (cf. figure 4).

Celui-ci est activé lors de la prochaine demande de mémorisation que le nombre de bits disponible au sein de la zone A soit suffisant ou non pour mémoriser les n unités.

Si le témoin C2 est allumé alors avant de mémoriser les unités consommées, le mécanisme de recouvrement est actionné par le système d'exploitation du module de sécurité.

Plusieurs cas se présentent. En effet la coupure a pu intervenir durant la mise à jour de la zone SB (cas 1), durant la mise à jour de la zone B (cas 2), durant l'effacement de la zone A (cas 3) ou entre ledites mises à jour (cas 4 et cas 5).

La procédure de recouvrement doit être distincte en fonction des différents cas listés précédemment.

Dans le cas où la zone SB n'a pu être correctement mise à jour (cas 1), le code de redondance SCR de celle-ci n'est pas conforme. La valeur contenue V0 dans la zone B est alors recopiée dans la zone SB, la zone B est ensuite mise à jour (nouvelle valeur V1 égale à la valeur courante V0 de la zone B à laquelle il faut ajouter le nombre de bits grillés dans la zone A valeur VA). Seul le nombre d'unités n-L qui devaient être mémorisé lors de la mémorisation interrompue est perdu.

La zone A est alors effacée et le témoin C2 également.

Dans le cas où la zone SB a été correctement mise à jour mais la zone B ne l'a pas été correctement (cas 2), le code de redondance SCR de la zone SB est correct. Par contre, celui CR de la zone B est incorrect.

La zone B est alors mise à jour comme suit :
La nouvelle valeur V1 de la zone B est égale à la valeur V0 de la zone SB à laquelle on ajoute le nombre de bits grillés dans la zone A c' est à dire une valeur VA, V1 = V0 + VA.

Dans ce cas comme dans le précédent, la seule information perdue correspond au nombre n-L unités restantes qui devait être mémorisé durant la mémorisation interrompue. La zone A est alors effacée et le témoin C2 également.

En examinant seulement les codes de redondance de la zone SB et de la zone B, il est impossible de savoir si la coupure de courant a eu lieu entre la mise à jour des zones SB et B (cas 4) ou après la mise à jour de ces deux zones (cas 5). En effet dans ces deux cas les codes de redondance sont tous les deux corrects.

Pour distinguer les cas 4 et 5, le système d'exploitation du module de sécurité compare les valeurs des zones SB et B : V(SB) = V(B) ? :
Si la zone SB contient la même valeur que la zone B alors la coupure d'alimentation a dû avoir lieu entre la mise à jour des zones SB et B (cas 4). Le traitement du mécanisme de recouvrement est alors identique à celui détaillé précédemment (cas 2).

Dans le cas contraire, la zone B a donc dû être correctement mise à jour (cas 5). Il faut alors effacer la zone A et le témoin C2. Aucune information n'a été perdue dans ce cas.

Il reste à traiter le cas où la coupure de courant a eu lieu durant l'effacement de la zone A (cas 3). Ce cas est similaire au cas précédent (cas 5).

Une fois que le mécanisme de recouvrement a été exécuté, les n unités à mémoriser le sont conformément à la description de l'invention réalisée précédemment.

## Revendications

1. Procédé de gestion sécurisée d'un compteur d'unités dans une mémoire programmable et effaçable électriquement, selon lequel on enregistre un nombre d'unités consommées par des utilisateurs au moyen du compteur, **caractérise en ce qu'**il consiste à décomposer le compteur d'unités en au moins deux zones mémoires (A, B), une première zone (A) dans laquelle on mémorise au moins un bit par au moins une unité consommée et une deuxième zone (B) dans laquelle on mémorise la valeur correspondant au cumul d'unités consommées, la deuxième zone n'étant mise à jour que lorsque le nombre d'unités consommées dépasse ou atteint le nombre de bits non mémorisés dans la première zone (A).

2. Procédé de gestion d'un compteur selon la revendication 1, **caractérisé en ce que** les unités consommées sont enregistrées dans la première zone (A) de manière cyclique.

3. Procédé de gestion selon les revendications 1 et 2, **caractérisé en ce qu'**une opération d'enregistrement de n unités consommées comprend les étapes suivantes :
- lecture (20) du contenu de la première zone (A) et comparaison (30) du nombre de bits L non mémorisés de la première zone (A) au nombre d'unités n consommées à enregistrer,
- si ce nombre de bits non mémorisés L est supérieur ou égal au nombre d'unités n à enregistrer, on mémorise (60) les n bits correspondant dans ladite première zone (A),
- si ce nombre L est inférieur, on mémorise (40) L bits dans la première zone (A) et on enregistre (50) les n-L unités restantes dans la deuxième zone (B) en effectuant une opération de mise à jour de cette zone et la première zone (A) est effacée.

4. Procédé de gestion selon l'une quelconque des revendications 1 à 4 **caractérisé en ce qu'**une opération de mise à jour de la deuxième zone (B) comprend une étape d'écriture dans cette zone d'une nouvelle valeur de compteur codée égale à la valeur courante à laquelle on ajoute le nombre de bits mémorisés de la première zone (A) et les n-L unités restantes consommées à mémoriser.

5. Procédé de gestion selon la revendication 4 **caractérisé en ce que** la mise à jour comprend une étape préalable d'enregistrement d'une information témoin (C2) signifiant qu'une mise à jour est en cours.

6. Procédé de gestion selon l'une quelconque des revendications précédentes **caractérisé en ce que** le compteur d'unité comporte une zone de sauvegarde (SB) de la deuxième zone (B) et **en ce que** ces deux zones comportent chacune un champs pour l'enregistrement d'un code de redondance (CR, SCR) pour la vérification de l'intégrité du contenu de ces deux zones.

7. Procédé de gestion selon les revendications 4 et 5, **caractérisé en ce qu'**une opération d'enregistrement de n unités consommées comprend en outre une étape préalable de vérification (10) de l'état du compteur comprenant les opérations suivantes
- vérification (11) de l'absence de l'information témoin d'une mise à jour en cours :
- vérification (12) de la validité des champs contenant les codes de redondances :
. dans le cas où les champs sont valides :
- enregistrement (13) des n unités;
. dans le cas où les champs ne sont pas valides :
- détection (14) d'un défaut et arrêt du compteur.
- dans le cas où l'information témoin est présente :
- activation de l'opération de recouvrement (15) pour rétablir l'intégrité des contenus du compteur.

8. Procédé de gestion selon les revendications 6 et 7, **caractérisé en ce qu'**une opération de mise à jour de la deuxième zone (B) comporte alors les étapes suivantes :
- enregistrement (51) de l'information témoin (C2),
- recopie (52) dans la zone de sauvegarde (SB) de la valeur (VO) du compteur codée de la deuxième zone (B),
Enregistrement (53) de la nouvelle valeur du compteur codée dans la deuxième zone (B),
Effacement (55) de l'information témoin (C2),

9. Procédé de gestion selon la revendication 8, **caractérisé en ce que** l'opération de recouvrement consiste à déterminer à quelle étape s'est produite l'anomalie, puis à opérer selon le cas déterminé, les étapes de mise à jour de la zone de sauvegarde (SB) et/ou de la deuxième zone (B) et/ou de la première zone (A).

10. Procédé de gestion selon la revendication 9, **caractérisé en ce que** la détermination de l'étape à laquelle s'est produite l'anomalie consiste à lire le contenu de chacune des zones pour savoir si l'anomalie s'est produite pendant la mise à jour de la zone de sauvegarde (SB) cas 1, pendant la mise à jour de la deuxième zone (B) cas 2, pendant l'effacement de la première zone (A) cas 3, entre la mise à jour de la deuxième zone (B) et la zone de sauvegarde (SB) cas 4, après la mise à jour de ces deux zones cas 5,
. dans le cas 1 à :
- recopier la valeur contenue dans la deuxième zone (B) dans la zone de sauvegarde (SB),
- mettre à jour la deuxième zone (B) en enregistrant la nouvelle valeur qui est égale à l'ancienne à laquelle on ajoute le contenu de la première zone (A),
- effacer la première zone (A),
- effacer l'information témoin (C2) ;
. dans le cas 2 à :
- recopier dans la deuxième zone (B) la valeur contenue dans la zone de sauvegarde (SB) en rajoutant la valeur contenue dans la première zone (A),
- effacer la première zone (A),
- effacer l'information témoin (C2) ;
. dans le cas 3 à :
- effacer le contenu de la première zone (A),
- effacer l'information témoin (C2) ;
. dans le cas 4 à :
- mettre en oeuvre les étapes selon le cas 2 ;
. dans le cas 5 à :
- mettre en oeuvre les étapes selon le cas 3.

11. Procédé de gestion selon l'une quelconque des revendications précédentes, **caractérisé en ce qu'**il comprend l'étape d'enregistrement d'une information significative (C1) d'une défaillance en lecture ou en écriture de la première zone (A) désactivant ladite zone lorsqu'il n'a pas été possible de lire ou d'écrire dans cette zone, une étape de lecture de cette information à chaque nouveau cycle, les unités consommées étant alors directement enregistrées de manière codée par une opération de mise à jour de la deuxième zone (B).

12. Procédé de gestion selon la revendication 5 et la revendication 11, **caractérisé en ce que** l'information témoin (C2) d'une mise à jour en cours et l'information significative d'une défaillance (C1) en lecture et en écriture de la première zone sont enregistrées dans une troisième zone (C) dudit compteur

13. Module de sécurité pour compter les unités comprenant une mémoire et des moyens de traitement, **caractérisé en ce que** :
- la mémoire comporte au moins trois zones mémoire, une première zone pour mémoriser au moins un bit par au moins une unité consommée, une deuxième zone pour mémoriser la valeur correspondant au cumul d'unités consommées et une troisième zone pour la sauvegarde de la deuxième zone,
- les moyens permettent de mettre à jour la deuxième zone uniquement lorsque le nombre d'unités consommées dépasse ou atteint le nombre de bits non mémorisés dans la première zone.

14. Module de sécurité selon la revendication 13 **caractérisé en ce qu'**il est apte à mettre en oeuvre le procédé selon l'une quelconque des revendications 1 à 12.

15. Terminal de téléphonie **caractérisé en ce qu'**il comporte un module de sécurité selon la revendication 13 ou 14 pour gérer les unités consommées.

## Claims

1. A management method for securely managing a unite counter in an electrically erasable programmable memory, in which method a number of units consumed by users is recorded, said method being **characterized in that** it consists in breaking down the units counter into at least two memory zones (A, B), namely a first zone (A) in which at least one bit is stored per at least one unit consumed, and a second zone (B) in which the value corresponding to the cumulative number of consumed units is stored, the second zone being updated only when the number of consumed units exceeds or reaches the number of bits not stored in the first zone (A).

2. A management method for managing a counter according to claim 1, **characterized in that** the consumed units are recorded in the first zone (A) cyclically

3. A management method according to claim 1 and claim 2, **characterized in that** an operation of recording n consumed units comprises the following steps:
- reading (20) the contents of the first zone (A) and comparing (30) the number T. of non-stored bits in the first zone (A) with the number n of consumed units to be recorded;
- if the number L of non-stored bits is greater than or equal to the number n of units to be recorded, storing (60) the n corresponding bits in said first zone (A);
- otherwise, storing (40) L bits in the first zone (A) and recording (50) the n-L remaining units in the second zone (B) by updating said zone, and erasing the first zone (A).

4. A management method according to any one of claims 1 to 4, **characterized in that** an operation of updating the second zone (B) comprises a step of writing in said second zone an encoded new counter value that is equal to the current value plus the number of bits stored in the first zone (A) and the n-L remaining consumed units to be stored.

5. A management method according to claim 4, **characterized in that** the updating further comprises a prior step of recording an item of indicator information (C2) indicating that updating is in progress.

6. A management method according to any preceding claim, **characterized in that** the units counter includes a backup zone (SB) for backing up the second zone (B), and **in that** each of these two zones includes a field for recording a redundancy code (CR, SCR) for checking the integrity of the contents of these two zones.

7. A management method according to claim 4 and claim 5, **characterized in that** an operation of recording n consumed units further comprises a prior checking step (10) for checking the status of the counter, which step comprises the following operations:
- checking (11) absence of indicator information indicating that updating is in progress;
- checking (12) the validity of the fields containing the redundancy codes;
· if the fields are valid:
- recording (13) the n units;
· if the fields are not valid:
- detecting (14) a fault and stopping the counter; and
· if the indicator information is present:
- activating the recovery operation (15) for reestablishing the integrity of the contents of the counter.

8. A management method according to claim 6 and claim 7, **characterized in that** an operation for updating the second zone (B) then comprises the following steps:
- recording (51) the indicator information (C2) ;
- copying (52) the encoded counter value (V0) from the second zone (B) over to the backup zone (SB);
- recording (53) the new encoded value of the counter in the second zone (B); and
- erasing (55) the indicator information (C2).

9. A management method according to claim 8, **characterized in that** the recovery operation consists in determining in which step the anomaly occurred, then in effecting, depending on the determined case, the steps of updating the backup zone (SB) and/or the second zone (B) and/or the first zone (A).

10. A management method according to claim 9, **characterized in that** determining in which step the anomaly occurred consists in reading the contents of each of the zones for the purpose of determining whether the anomaly occurred during updating of the backup zone (SB), referred to as "case 1", during updating of the second zone (B), referred to as "case 2", during erasure of the first zone (A), referred to as "case 3", between updating of the second zone (B) and updating of the backup zone (SB), referred to as case 4, or after updating these two zones, referred to as case 5;
· in case 1:
- in copying the value contained in the second zone (B) over to the backup zone (SB);
- in updating the second zone (B) by recording the new value that is equal to the old value plus the contents of the first zone (A);
- in erasing the first zone (A) ;
- in erasing the indicator information (C2);
· in case 2:
- in copying the value contained in the backup zone (SB) over to the second zone (B) plus the value contained in the first zone (A);
- in erasing the first zone (A);
- in erasing the indicator information (C2);
· in case 3:
- in erasing the contents of the first zone (A);
- in erasing the indicator information (C2);
· in case 4:
- in implementing the steps as in case 2; and
· in case 5:
- in implementing the steps as in case 3.

11. A management method according to any preceding claim, **characterized in that** it further comprises the step of recording an item of information (C1) indicative of a read or write failure in the first zone (A) deactivating said zone when it is not possible to read or write in said zone, and a step of reading said information at each now cycle, the consumed units then being recorded directly in encoded manner by an operation of updating the second zone (B).

12. A management method according to claim 5 and claim 11, **characterized in that** the information (C2) indicating that updating is in progress and the information (C1) indicative of a read and write failure in the first zone are recorded in a third zone (C) of said counter.

13. A security module for counting the units, said security module comprising a memory and processor means, and being **characterized in that**:
- the memory comprises at least three memory zones, namely a first zone for storing at least one bit per at least one unit consumed, a second zone for storing the value corresponding to the cumulative number of consumed units, and a third zone for backing up the second zone; and
- the processor means make it possible to update the second zone only when the number of consumed units exceeds or reaches the number of bits not stored in the first zone.

14. A security module according to claim 13, **characterized in that** it is suitable for implementing the method according to any one of claims 1 to 12.

15. A telephone terminal **characterized in that** it includes a security modulo according to claim 13 or claim 14 for managing the consumed units.

## Patentansprüche

1. Gesichertes Verwaltungsverfahren eines Einheitenzählers in einem programmierbaren und elektrisch löschbaren Speicher, nach dem eine Anzahl von von Nutzern mittels des Computers verbrauchten Einheiten erfasst wird, **dadurch gekennzeichnet, dass** es in der Aufteilung des Einheitenzählers in wenigstens zwei Speicherzonen (A, B) besteht, eine erste Zone (A), in der wenigstens ein Bit pro wenigstens einer verbrauchten Einheit gespeichert wird, und eine zweite Zone (B), in der der der Häufung von verbrauchten Einheiten entsprechende Wert gespeichert wird, wobei die zweite Zone nur aktualisiert wird, wenn die Anzahl von verbrauchten Einheiten die Anzahl von nicht in der ersten Zone (A) gespeicherten Bits erreicht oder überschreitet.

2. Verwaltungsverfahren eines Zählers gemäß Anspruch 1, **dadurch gekennzeichnet, dass** die verbrauchten Einheiten in der ersten Zone (A) auf zyklische Weise gespeichert werden.

3. Verwaltungsverfahren gemäß Anspruch 1 und 2, **dadurch gekennzeichnet, dass** eine Speicheroperation von n verbrauchten Einheiten die folgenden Stufen umfasst:
- Lesen (20) des Inhaltes der ersten Zone (A) und Vergleich (30) der Anzahl von nicht gespeicherten Bits L der ersten Zone (A) mit der Anzahl von verbrauchten, zu erfassenden Einheiten n,
- wenn diese Anzahl von nicht gespeicherten Bits L höher als oder gleich der Anzahl der zu erfassenden Einheiten n ist, werden die entsprechenden n Bits in der genannten ersten Zone (A) gespeichert (60)
- wenn diese Anzahl L geringer ist, werden L Bits in der ersten Zone (A) gespeichert (40) und die verbleibenden n-L Einheiten werden in der zweiten Zone (B) unter Durchführung einer Aktualisierungsoperation dieser Zone erfasst (50), und die erste Zone (A) wird gelöscht.

4. Verwaltungsverfahren gemäß Anspruch 1 bis 4, **dadurch gekennzeichnet, dass** eine Aktualisierungsoperation der zweiten Zone (B) eine Schreibstufe in dieser Zone eines neuen kodierten Zählerwertes gleich dem laufenden Wert umfasst, zu dem die Anzahl von gespeicherten Bits der ersten Zone (A) und die verbleibenden, n-L, zu speichernden, verbrauchten Einheiten hinzugefügt werden.

5. Verwaltungsverfahren gemäß Anspruch 4, **dadurch gekennzeichnet, dass** die Aktualisierung eine vorherige Erfassungsstufe einer Rezugsinformation (C2) umfasst, die bedeutet, dass eine Aktualisierung in Gange ist.

6. Verwaltungsverfahren gemäß einem der vorherigen Ansprüche, **dadurch gekennzeichnet, dass** der Einheitenzähler eine Speicherzone (SB) der zweiten Zone (B) umfasst und dass diese beiden Zonen jeweils ein Feld für die Erfassung eines Redundanzcodes (CR, SCR) für die Überprüfung der Integrität des Inhalts dieser beiden Zonen umfassen.

7. Verwaltungsverfahren gemäß Anspruch 4 und 5, **dadurch gekennzeichnet, dass** eine Erfassungsoperation von n verbrauchten Einheiten darüber hinaus eine vorherige Überprüfungsstufe (10) des Zustandes des Zählers mit den folgenden Operationen umfasst:
- Überprüfung (11) der Abwesenheit der Bezugsinformation einer laufenden Aktualisierung;
- Überprüfung (12) der Gültigkeit der die Redundanzcodes enthaltenden Felder;
- in dem Fall, in dem die Felder gültig sind:
- Erfassen (13) der n Einheiten;
- in dem Fall, in dem die Felder nicht gültig sind,
- Feststellung (14) eines Fehlers und Ausschalten des Zählers.
- in dem Fall, in dem die Bezugsinformation vorhanden ist;
- Aktivierung der Operation zum Wiederauffinden (15) zur Wiederherstellung der Integrität der Inhalte des Zählers.

8. Verwaltungsverfahren gemäß Anspruch 6 und 7, **dadurch gekennzeichnet, dass** eine Aktualisierungsoperation der zweiten Zone (B) dann die folgenden Stufen umfasst:
- Erfassen (51) der Bezugsinformation (C2),
- Abkopieren (52) in der Abspeicherzone (SB) des Wertes (VO) des kodierten Zählers der zweiten Zone (B),
Erfassen (53) des neuen Wertes des kodierten Zählers in der zweiten Zone (B),
Löschen (55) der Bezugsinformation (C2).

9. Verwaltungsverfahren gemäß Anspruch 8, **dadurch gekennzeichnet, dass** die Operation zum Wiederauffinden in der Bestimmung darin besteht, in welcher Stufe die Anomalie aufgetreten ist, dann in der Durchführung je nach dem festgestellten Fall der Aktualisierungsstufen der Abspeicherzone (SB) und / oder der zweiten Zone (B) und / oder der ersten Zone (A).

10. Verwaltungsverfahren gemäß Anspruch 9, **dadurch gekennzeichnet, dass** die Bestimmung der Stufe, in der die Anomalie aufgetreten ist, im Lesen des Inhalts jeder Zone besteht, um festzustellen, ob die Anomalie während der Aktualisierung der Abspeicherzone (SB) Fall 1, während der Aktualisierung der zweiten Zone (B) Fall 2, während des Löschens der ersten Zone (A) Fall 3, zwischen der Aktualisierung der zweiten Zone (B) und der Speicherzone (SB) Fall 4, nach der Aktualisierung dieser beiden Zonen Fall 5 aufgetreten ist,
* im Fall 1:
- im Abkopieren des in der zweiten Zone (B) enthaltenen Wertes in die Abspeicherzone (SB),
- in der Aktualisierung der zweiten zone (B) durch die Erfassung des neuen Wertes, der gleich dem alten Wert ist, zu dem der Inhalt der ersten Zone (A) hinzugefügt wird,
- Löschen der ersten Zone (A),
- Löschen der Bezugsinformation (C2);
* im Fall 2:
- im Abkopieren des in der Abspeicherzone (SB) enthaltenen Wertes in die zweite Zone (B) durch Hinzufügen des in der ersten Zone (A) enthaltenen Wertes,
- im Löschen der ersten Zone (A),
- im Löschen der Bezugsinformation (C2);
* im Fall 3:
- im Löschen des Inhaltes der ersten Zone (A),
- im Löschen der Bezugsinformation (C2) ;
* im Fall 4:
- in der Umsetzung der Stufen gemäß Fall 2;
* im Fall 5:
- in der Umsetzung der Stufen gemäß Fall 3.

11. Verwaltungsverfahren gemäß einem der vorherigen Ansprüche, **dadurch gekennzeichnet, dass** es die Erfassungsstufe einer Information (C1), die einen Ausfall beim Lesen oder beim Schreiben der ersten Zone (A) bedeutet und die genannte Zone deaktiviert, wenn es nicht möglich war, in dieser Zone zu lesen oder zu schreiben, eine Lesestufe dieser Information in jedem neuen Zyklus umfasst, wobei die verbrauchten Einheiten dann direkt auf kodierte Weise direkt durch eine Aktualisierungsoperation der zweiten Zone (B) erfasst werden.

12. Verwaltungsverfahren gemäß Anspruch 5 und Anspruch 11, **dadurch gekennzeichnet, dass** die Bezugsinformation (C2) einer laufenden Aktualisierung und die Information (C1), die einen Ausfall beim Lesen und beim Schreiben der ersten Zone bedeutet, in einer dritten Zone (C) des genannten Zählers erfasst werden.

13. Sicherheitsmodul zum Zählen der Einheiten mit einem Speicher und Verarbeitungsmitteln, **dadurch gekennzeichnet, dass**:
- der Speicher wenigstens drei Speicherzonen, eine erste Zone zur Speicherung wenigstens eines Bits pro wenigstend einer verbrauchten Einheit, eine zweite Zone zur Speicherung des der Anhäufung von verbrauchten Einheiten entsprechenden Wertes und eine dritte Zone für die Abspeicherung der zweiten Zone umfasst,
- die Mittel die Aktualisierung der zweiten Zone nur dann erlauben, wenn die Anzahl von verbrauchten Einheiten die Anzahl von nicht in der ersten Zone gespeicherten Bits erreicht oder übersteigt.

14. Sicherheitsmodul gemäß Anspruch 13, **dadurch gekennzeichnet, dass** es zur Umsetzung des Verfahrens gemäß Anspruch 1 bis 12 geeignet ist.

15. Telefonterminal, **dadurch gekennzeichnet, dass** es ein sicherheitsmodul gemäß Anspruch 13 oder 14 zur Verwaltung der verbrauchten Einheiten umfasst.
